Europäisches Patentamt

European Patent Office

Office européen des brevets

(19)

(11) Veröffentlichungsnummer: **0 277 087**
**B1**

# EUROPÄISCHE PATENTSCHRIFT

(12)

(45) Veröffentlichungstag der Patentschrift:
22.08.90

(21) Anmeldenummer: 88730008.5

(22) Anmeldetag: 15.01.88

(51) Int. Cl.⁵: **B65G 17/42**

(54) Kettenförderer.

(30) Priorität: 30.01.87 DE 3703214

(43) Veröffentlichungstag der Anmeldung:
03.08.88 Patentblatt 88/31

(45) Bekanntmachung des Hinweises auf die Patenterteilung:
22.08.90 Patentblatt 90/34

(84) Benannte Vertragsstaaten:
AT DE GB IT

(56) Entgegenhaltungen:
DE-A- 1 922 146
DE-U- 3 502 312
GB-A- 1 429 222

(73) Patentinhaber: RUD-Kettenfabrik Rieger & Dietz GmbH
u. Co., Friedensinsel, D-7080 Aalen 1(DE)

(72) Erfinder: Zenker, Hartwig, Waldhäuser Strasse 64,
D-7080 Aalen-Unterkochen(DE)

(74) Vertreter: Böning, Manfred, Dr. Ing. et al, Patentanwälte
Dipl.-Ing. Dieter Jander Dr. Ing. Manfred Böning
Kurfürstendamm 66, D-1000 Berlin 15(DE)

**Beschreibung**

Die Erfindung betrifft einen Kettenförderer mit mindestens einem durch ein Zahnkettenrad antreibbaren Kettenstrang aus ovalen Kettengliedern, insbesondere Rundstahlgliedern, bei dem am jeweiligen Kettenstrang mittels jeweils nur eines an seinen beiden Enden mit Gewinde versehenen U-förmigen Anschlußbügels Föderelemente, insbesondere Becher, angeschraubt sind, wobei die Anschlußbügel jeweils einen geraden Teil eines Schenkels eines senkrecht zur Kettenradachse orientierten Kettengliedes umfassen und dieser gerade Teil in einem im Bereich seiner Mitte mit einer Aussparung versehenen Stütz und Führungsbett ruht, das von einem lösbar mit dem Förderelement verbundenen Bauteil gebildet wird, dessen dem Förderelement zugewandte Grundfläche leicht konkav ist.

Aus dem DE-GM 85 o2 312 ist ein Kettenförderer der vorstehenden Art bekannt, bei dem Anschlußbügel Verwendung finden, die aus Rundstahl gebogen und an der dem Kettenglied zugewandten Seite ihrer Rundung abgeflacht sind. Die Breite der Abflachung ist dabei kleiner als die Breite der Aussparung im Stütz- und Führungsbett. Bei der bekannten Konstruktion kann es unter bestimmten Bedingungen, wie z.B. bei ungünstiger Lage und Ausbildung des Schweißwulstes des Kettengliedes und Aufbringung großer Spannkräfte, zu unerwünschten Verformungen des geraden Teiles des vom Anschlußbügel umfaßten Kettengliedschenkels kommen.

Bei einem anderen aus der DE-OS 19 22 146 bekannten Kettenförderer dienen zum Verbinden der Förderelemente mit den Kettensträngen Paare sogenannter Flanschmitnehmer, deren Flansche durch einen zentralen Schraubenbolzen gegen die sich jeweils gegenüberliegenden Seiten der beiden Schenkel eines Vertikalgliedes gepreßt werden. In diesem Fall stützt sich jeder Flansch an den Gliedschenkeln über vier Klemmbacken ab, die im Abstand voneinander angeordnet sind und außerhalb des Bereiches der Schweißwulste liegen, so daß hier nachteilige Deformationen der Gliedschenkel, wie sie beim zuvor beschriebenen Kettenförderer auftreten können, nicht zu befürchten sind. Diese zweite bekannte Konstruktion mit ihrer von Haus aus zwangsläufig gegebenen VierPunkt-Abstützung liefert jedoch nicht zuletzt im Hinblick auf ihren grundsätzlich anderen Aufbau keine Anregung zur Umgestaltung eines gattungsgemäßen Kettenförderers, bei dem die Förderelemente an nur jeweils einen Gliedschenkel angeschlossen sind.

Der Erfindung liegt die Aufgabe zugrunde, den geschilderten Verformungen bei einem Kettenförderer der in Betracht gezogenen Art entgegenzuwirken und diesen Kettenförderer so zu gestalten, daß mit den Anschlußbügeln unabhängig von der Lage des Schweißwulstes der Kettenglieder hohe Spann bzw. Klemmkräfte aufgebracht werden können. Diese Aufgabe wird erfindungsgemäß dadurch gelöst, daß die dem geraden Teil des umfaßten Kettengliedschenkels zugewandte Seite der Rundung des Anschlußbügels mit einer Ausnehmung versehen ist, die von seitlichen Stützstegen begrenzt wird, die zur Übertragung der Spannkräfte vom Anschlußbügel auf den Kettengliedschenkel dienen.

Bei dem erfindungsgemäßen Kettenförderer lassen sich aufgrund der gewählten Form der Anschlußbügel erhebliche Spann- und Klemmkräfte aufbringen, ohne den vom Anschlußbügel umfaßten Teil des Kettengliedes zu gefährden. Dies gilt insbesondere dann, wenn die Breite der den geraden Teil des jeweiligen Kettengliedschenkels umfassenden Rundung des Anschlußbügels größer ist als die Breite der Aussparung des Bauteiles und wenn die Stützstege einen Abstand voneinander haben, der mindestens gleich der Breite der Aussparung ist. In diesem Fall werden nicht nur keine vom Schweißwulst herrührenden Kerbkräfte auf den Kettenglied schenkel übertragen, sondern dieser wird im Bereich der Anschlußstelle auch nicht durch die in dem Anschlußbügel ausgeübten Spannkräfte auf Biegung beansprucht. Die Spannkräfte können folglich problemlos hinreichend groß gewählt werden, um die dem Förderelement zugewandte konkave Grundfläche des Bauteiles so zu deformieren, daß es zu einer weitgehend vollflächigen Anlage zwischen Bauteil und Förderelement kommt und auf diese Weise ein fester Sitz des Bauteiles am Förderelement erreicht wird.

Die Erfindung wird im folgenden anhand der beigefügten Zeichnung näher erläutert. Es zeigen:

Fig. 1 teilweise im Schnitt eine erste Seitenansicht der Anschlußstelle eines Förderelementes an einen Kettenstrang eines Kettenförderers;

Fig. 2 teilweise im Schnitt eine zweite Seitenansicht der Anschlußstelle gemäß Fig. 1;

Fig. 3 teilweise im Schnitt die Stirnansicht der Anschlußstelle gemäß Fig. 1 und 2;

Fig. 4 die Draufsicht auf ein zur Anschlußstelle gemäß Fig. 1 bis 3 gehörendes ein Stützund Führungsbett für ein Kettenglied bil dendes Bauteil;

Fig. 5 die Stirnansicht des Bauteiles gemäß Fig. 4;

Fig. 6 einen Schnitt längs der Linie VI-VI in Fig. 4;

Fig. 7 einen Schnitt längs der Linie VII-VII in Fig. 4;

Fig. 8 einen Schnitt längs der Linie VIII-VIII in Fig. 4;

Fig. 9 einen der Fig. 8 entsprechenden Schnitt durch ein leicht modifiziertes Bauteil gemäß Fig. 4;

Fig. 10 die Seitenansicht eines zur Anschlußstelle gemäß Fig. 1 bis 3 gehörenden Anschlußbügels;

Fig. 11 einen Schnitt längs der Linie XI-XI in Fig. 10 und

Fig. 12 die Draufsicht auf den Anschlußbügel gemäß Fig. 10.

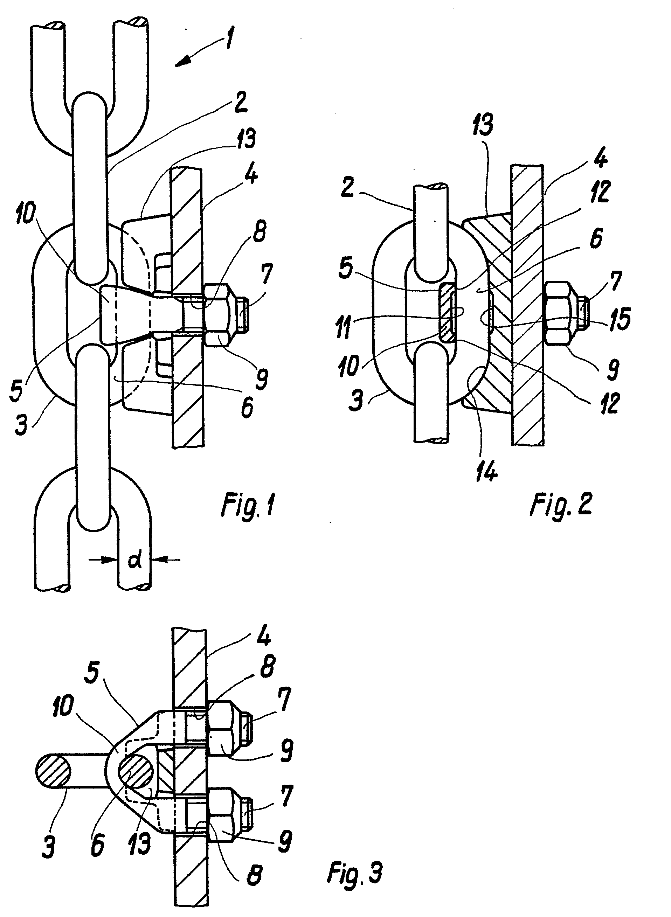

In Fig. 1 ist mit 1 allgemein ein Teil eines durchgehenden Kettenstranges eines Kettenförderers bezeichnet. Der Kettenstrang 1 besteht aus normalen ovalen Kettengliedern 2 und 3. Die Kettenglieder 2 sind parallel zur Achse eines nicht dargestellten Kettenrades orientiert und die Kettenglieder 3 stehen senkrecht zur Achse dieses Kettenrades. In der Praxis werden die Kettenglieder 2, in die die Zähne des Kettenrades eingreifen, regelmäßig als Horizontalglieder und die Kettenglieder 3 regelmäßig als Vertikalglieder bezeichnet.

An bestimmten Kettengliedern 3 ist jeweils ein Förderelement 4 befestigt, das bei Ausbildung des Kettenförderers als Doppelstrangförderer vorzugsweise von einem Becher gebildet wird. In den Zeichnungen ist lediglich ein Teil der Rückwand eines Förderelementes 4 dargestellt.

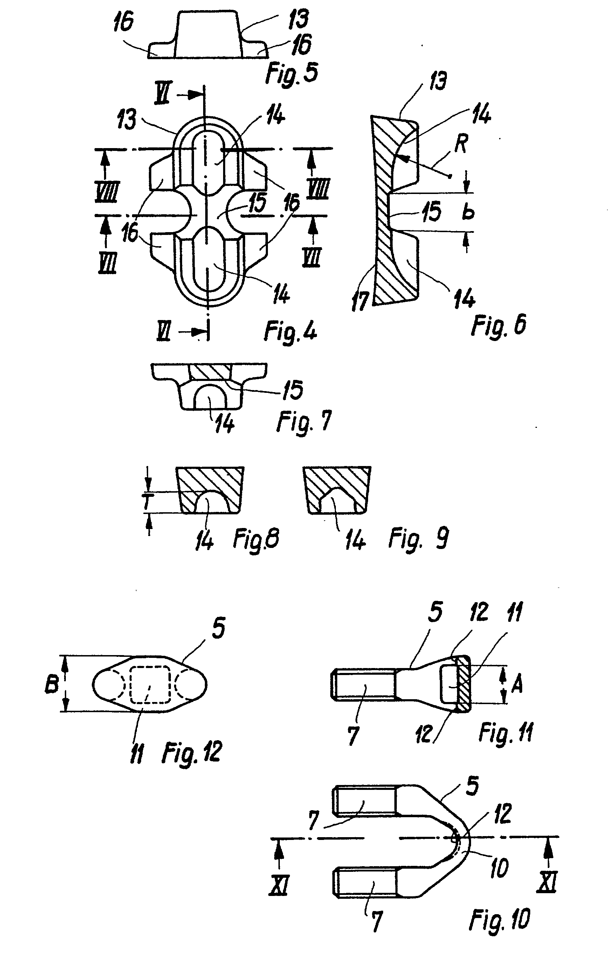

Zur Befestigung des Förderelementes 4 an einem Kettenglied 3 des Kettenstranges 1 dient ein U-förmiger Anschlußbügel 5, der den geraden Teil eines Schenkels 6 des Kettengliedes 3 umschließt. Die mit Gewinde versehenen Bügelarme 7 des Anschiußbügels 5 ragen durch Bohrungen 8 des Förderelementes 4 und sind an der dem Kettenstrang 1 abgewandten Seite des Förderelementes 4 durch Muttern 9 gesichert. Der Anschlußbügel 5 ist vor zugsweise als Schmiedeteil ausgebildet. Einzelheiten seines Aufbaus zeigen die Fig. 10 bis 12. Seine die Bügelarme 7 miteinander verbindende Rundung 10 hat eine Breite B und ist mit einer Ausnehmung 11 versehen, welche von im Abstand A parallel zueinander verlaufenden seitlichen Stützstegen 12 begrenzt wird. Die die Festigkeit des Anschlußbügels 5 bestimmenden Querschnitte der Rundung 10 und der Bügelarme 7 sind im wesentlichen gleich groß. Im Hinblick auf die flache Ausbildung der Rundung 10 ist deren Steifigkeit dagegen kleiner als die Steifigkeit der Bügelarme 7, dies wirkt sich insofern positiv aus als sich die Bügelrundung 10 gut an den Umfang des von ihr umfaßten Schenkels 6 des Kettengliedes 3 anpassen kann.

Zwischen dem Förderelement 4 und dem Kettenglied 3 ist lösbar ein Bauteil 13 angeordnet, dessen Aufbau sich aus den Fig. 4 bis 9 ergibt. Das Bauteil 13 formt ein Stütz- und Führungsbett 14, dessen Tiefe T vorzugsweise mindestens gleich der halben Gliedstärke d/2 und höchstens gleich der vollen Gliedstärke d des Schenkels 6 des Kettengliedes 3 ist. Um eine gute Auflage des Schenkels 6 des Kettengliedes 3 auch im Stütz- und Führungsbett 14 sicherzustellen, ist dies im Bereich seiner Mitte mit einer Aussparung 15 versehen, deren Breite b vorzugsweise nicht größer, sondern eher kleiner als der Abstand A zwischen den Stützstegen 12 ist. Die Endbereiche des Stützund Führungsbettes 14 haben einen Radius R, der dem Außenradius der Rundungen des Kettengliedes 3 entspricht. Das Kettenglied 3 liegt mit seinem Schenkel 6 mithin weitgehend gegen Verschiebungen gesichert im Stütz- und Führungsbett 14. Durch die vergleichsweise große Tiefe T des Stütz- und Führungsbettes 14 (vgl. Fig. 8) erfolgt ein selbsttätiges Ausrichten des Kettengliedes 3 zum Förderelement 4.

Zur Justierung des Bauteiles 13 am Förderelement 4 dienen von seitlichen Vorsprüngen gebildete Führungsgabeln 16.

Wie man aus Fig. 6 entnehmen kann, ist die dem Förderelement 4 zugewandte Grundfläche 17 des Bauteiles 13 leicht konkav ausgebildet. Auf diese Weise kommt es beim Festschrauben des Anschlußbügels 5 am Förderelement 4 oder an einer dessen Rückwand verstärkenden Lasche bei Anwendung entsprechend hoher Spannkräfte zu einer elastischen Deformation des Bauteiles 13. Die Folge ist, daß die Kraftübertragung durch einen kombinierten Reib- und Formschluß erfolgt.

Fig. 9 zeigt einen leicht modifizierten, d.h. prismatischen, Stütz- und Führungsbettquerschnitt.

## Patentansprüche

1. Kettenförderer mit mindestens einem durch ein Zahnkettenrad antreibbaren Kettenstrang aus ovalen Kettengliedern (3), insbesondere Rundstahlgliedern, bei dem am jeweiligen Kettenstrang mittels jeweils nur eines an seinen beiden Enden mit Gewinde versehenen U-förmigen Anschlußbügels (5) Förderelemente (4), insbesondere Becher, angeschraubt sind, wobei die Anschlußbügel (5) jeweils einen geraden Teil eines Schenkels (6) eines senkrecht zur Kettenradachse orientierten Kettengliedes umfassen und dieser gerade Teil in einem im Bereich seiner Mitte mit einer Aussparung (15) versehenen Stütz- und Führungsbett (14) ruht, das von einem lösbar mit dem Förderelement verbundenen Bauteil (13) gebildet wird, dessen dem Förderelement (4) zugewandte Grundfläche (17) leicht konkav ist, dadurch gekennzeichnet, daß die dem geraden Teil des umfaßten Kettengliedschenkels (6) zugewandte Seite der Rundung (10) des Anschlußbügels (5) mit einer Ausnehmung (11) versehen ist, die von seitlichen Stützstegen (12) begrenzt wird, die zur Übertragung der Spannkräfte vom Anschlußbügel (5) auf den Kettengliedschenkel (6) dienen.

2. Kettenförderer nach Anspruch 1, dadurch gekennzeichnet, daß die Breite (B) der den geraden Teil des jeweiligen Kettengliedschenkels (6) umfassenden Rundung (10) des Anschlußbügels (5) größer ist als die Breite (b) der Aussparung (15) des Bauteiles (13) und daß die Stützstege (12) einen Abstand (A) voneinander haben, der mindestens gleich der Breite(b) der Aussparung (15) ist.

3. Kettenförderer nach Anspruch 1 oder 2, dadurch gekennzeichnet, daß der Querschnitt der Rundung (10) des Anschlußbügels (5) gleich dem Querschnitt seiner mit Gewinde versehenen parallelen Bügelarme (7) ist.

4. Kettenförderer nach einem der Ansprüche 1 bis 3, dadurch gekennzeichnet, daß der Anschlußbügel (5) als Guß- oder Schmiedeteil ausgebildet ist.

5. Kettenförderer nach einem der Ansprüche 1 bis 4, dadurch gekennzeichnet, daß das Stützund Führungsbett (14) eine Tiefe (T) hat, die mindestens gleich der halben Gliedstärke (d/2) und höchstens gleich der vollen Gliedstärke (d) des Kettengliedes (3) ist.

6. Kettenförderer nach einem der Ansprüche 1 bis 5, dadurch gekennzeichnet, daß das Stütz- und Führungsbett (14) mit mindestens einem den Rundungen des Kettengliedes (3) angepaßten Endbereich versehen ist.

7. Kettenförderer nach einem der Ansprüche 1 bis 6, dadurch gekennzeichnet, daß das Stütz- und Führungsbett (14) eine Sicherung gegen Verschiebungen des von ihm umfaßten Schenkels (6) des Kettengliedes (3) bildet.

8. Kettenförderer nach einem der Ansprüche 1 bis 7, dadurch gekennzeichnet, daß das Bauteil (13) mit Führungsgabeln (16,16) für den Anschlußbügel (5) versehen ist.

9. Kettenförderer nach einem der Ansprüche 1 bis 8, dadurch gekennzeichnet, daß der Anschlußbügel (5) im Bereich seiner Rundung (10) eine flache, die runden Bügelarme (7) miteinander verbindende Brücke bildet.

10. Kettenförderer nach einem der Ansprüche 1 bis 9, dadurch gekennzeichnet, daß er als Mehrstrangförderer ausgebildet ist.

## Claims

1. A chain conveyor comprising at least one chain drivable by a toothed chain wheel and having oval links (3), more particularly round-steel links, with conveying elements (4), more particularly cups, being secured to each chain by a single respective U-shaped connecting bracket (5) threaded at both ends, the brackets (5) each surrounding a straight part of a leg (6) of a link extending at right angles to the chain-wheel axis and the straight part resting in a supporting and guide bed (14) formed with a central recess (15) and comprising a component (13) releasably secured to the conveying element, the base surface (17) of the component facing the conveying element (4) being slightly concave, characterised in that the side of the curved part (10) of the connecting bracket (5) facing the clamped link leg (6) has a recess (11) bounded by lateral supporting webs (12) which transmits tensional forces from the connecting bracket (5) to the leg (6).

2. A chain conveyor according to claim 1, characterised in that the width (B) of the curved part (10) of the connecting bracket (5) surrounding the straight part of the respective link leg (6) is greater than the width (b) of the recess (15) in the component (13), and the spacing (A) between the supporting ribs (12) is at least equal to the width (b) of the recess (15).

3. A chain conveyor according to claim 1 or 2, characterised in that the cross-section of the curved part (10) of the connecting bracket (5) is equal to the cross-section of the parallel arms (7) of the bracket, which are threaded.

4. A chain conveyor according to any of claims 1 to 3, characterised in that the connecting bracket (5) is a cast or forged part.

5. A chain conveyor according to any of claims 1 to 4, characterised in that the supporting and guide bed (14) has a depth (T) which is at least equal to half (d/2) the thickness of the link (3) and is not more than the full thickness (d) thereof.

6. A chain conveyor according to any of claims 1 to 5, characterised in that the supporting and guide bed (14) has at least one edge region which matches the curved parts of the link (3).

7. A chain conveyor according to any of claims 1 to 6, characterised in that the supporting and guide bed (14) prevents displacement of the clamped leg (6) of the link (3).

8. A chain conveyor according to any of claims 1 to 7, characterised in that the component (13) has forks (16, 16) for guiding the connecting bracket (5).

9. A chain conveyor according to any of claims 1 to 8, characterised in that the curved part (10) of the connecting bracket (5) forms a flat bridge which connects the round bracket arms (7).

10. A chain conveyor according to any of claims 1 to 9, characterised in that it is a multi-strand conveyor.

## Revendications

1. Convoyeur à chaîne comportant au moins un tronçon de chaîne pouvant être entraîné par une roue de chaîne à dents et constitué de maillons ovales (3), en particulier de maillons en acier rond, dans lequel, sur chaque tronçon de chaîne, des éléments de transport (4), en particulier des godets, sont vissés au moyen d'un seul étrier de raccordement (5) en forme de U muni à ses deux extrémités d'un filetage, les étriers de raccordement (5) entourant à chaque fois une partie rectiligne d'une branche (6) d'un maillon de chaîne orienté perpendiculairement par rapport à l'axe de la roue de chaîne, cette partie rectiligne reposant dans un fond de support et de guidage (14) muni dans sa zone centrale d'un évidement (15) et qui est constitué d'une pièce (13) reliée de manière détachable à l'élément de convoyeur et dont la surface de base (17) orientée vers l'élément de transport (4) est légèrement concave, caractérisé en ce que le côté de la partie arrondie (10) de l'étrier de raccordement (5) qui fait face à la partie rectiligne de la branche de maillon (6) présente un évidemment (11) qui est limité par des traverses de support (12) qui servent à transmettre les forces de tension de l'étrier de raccordement (5) vers la branche de maillon (6).

2. Convoyeur à chaîne selon la revendication 1, caractérisé en ce que la largeur (B) de la partie ronde (10) de l'étrier de raccordement (5) qui entoure la partie rectiligne de la branche (6) du maillon est plus grande que la largeur (b) de l'évidement (15) de la pièce (13) et en ce que les traverses de support (12) sont séparées entre elles par une distance (A) qui est au moins égale à la largeur (b) de l'évidement (15).

3. Convoyeur à chaîne selon la revendication 1 ou 2, caractérisé en ce que la section de la partie ronde (10) de l'étrier de raccordement (5) est égale à la section de ses bras d'étrier (7) parallèles muni d'un filetage.

4. Convoyeur à chaîne selon l'une des revendications 1 à 3, caractérisé en ce que l'étrier de raccordement (5) est constitué d'une pièce de fonderie ou d'une pièce obtenue par forgeage.

5. Convoyeur à chaîne selon l'une des revendications 1 à 4, caractérisé en ce que le fond de support et de guidage (14) présente une profondeur (T) qui est au moins égale à la moitié de l'épaisseur (d/2) du maillon et au plus égale à l'épaisseur totale (d) du maillon (3).

6. Convoyeur à chaîne selon l'une des revendications 1 à 5, caractérisé en ce que le fond de support et de guidage (14) est muni d'au moins une zone finale adaptée aux parties arrondies du maillon (3).

7. Convoyeur à chaîne selon l'une des revendications 1 à 6, caractérisé en ce que le fond de support et de guidage (14) constitue une sécurité contre des coulissements de la branche (6) du maillon qu'il entoure.

8. Convoyeur à chaîne selon l'une des revendications 1 à 7, caractérisé en ce que la pièce (13) est munie de fourches de guidage (16, 16) pour l'étrier de raccordement (5).

9. Convoyeur à chaîne selon l'une des revendications 1 à 8, caractérisé en ce que l'étrier de raccordement (5) forme, dans la zone de sa partie ronde (10), un pont plat reliant les bras d'étrier ronds (7) entre eux.

10. Convoyeur à chaîne selon l'une des revendications 1 à 9, caractérisé en ce qu'il est conformé sous la forme d'un convoyeur à plusieurs tronçons.

EP 0 277 087 B1

Fig. 1

Fig. 2

Fig. 3

Fig. 5

Fig. 4

Fig. 6

Fig. 7

Fig.8    Fig. 9

Fig. 12

Fig. 11

Fig. 10